# FASCICULE DE BREVET EUROPEEN

(11) **EP 1 571 069 B1**
(45) Date de publication et mention de la délivrance du brevet: **12.07.2006**
(21) Numéro de dépôt: 05300151.7
(22) Date de dépôt: 28.02.2005
(51) Int. Cl.: B62D 25/08, B60J 10/00

(54) **Dispositif de fixation d'un élément de carrosserie de véhicule automobile**
Befestigungsvorrichtung für ein Karosserieteil eines Kraftfahrzeuges
Fastening device for a body part of a motor vehicle

(30) Priorité: 03.03.2004 FR 0450432
(43) Date de publication de la demande: 07.09.2005
(73) Titulaire: Peugeot Citroen Automobiles, 78140 Velizy-Villacoublay (FR)
(72) Inventeur: Guihaire, Stéphane, 78150 Le Chesney (FR)
(74) Mandataire: De Cuenca, Emmanuel Jaime

(56) Documents cités:
- EP-A- 0 099 115
- FR-A- 2 817 302

## Description

L'invention se rapporte à un dispositif de fixation d'un élément de carrosserie d'un véhicule automobile.

L'invention concerne plus particulièrement un dispositif de fixation d'une grille d'auvent sur un élément d'étanchéité destiné à être disposé sur un parebrise de véhicule automobile. Un tel dispositif est divulgué dans EP-A-099115.

Il est connu de réaliser une jonction étanche entre un parebrise et une grille d'auvent disposée tranversalement au véhicule. De manière classique, une grille d'auvent est agencée sur un joint d'étanchéité disposé sur tout ou partie du parebrise du véhicule. Le joint d'étanchéité est alors conformé pour assurer, outre l'étanchéité entre le parebrise et la grille d'auvent, la solidarisation de la grille d'auvent au parebrise.

Le joint d'étanchéité comporte ainsi plusieurs moyens de solidarisation, notamment qualifiés de moyen d'accrochage et de moyen de maintien, compte tenu de leur fonction respective d'accrochage du joint d'étanchéité au parebrise, et de maintien de la grille d'auvent au joint d'étanchéité. C'est ainsi que les moyens d'accrochage et de maintien définissent des ouvertures sensiblement de forme en U et disposées perpendiculairement l'une à l'autre.

Afin de permettre le maintien de la grille d'auvent, au moins un élément de crochetage destiné à coopérer avec l'ouverture dédiée au maintien de la grille sur le joint d'étanchéité est classiquement disposé sur le corps de la grille, traditionnellement dans son prolongement, faisant ainsi saillie hors du corps de la grille d'auvent.

Les architectures actuelles de véhicule prévoient une implantation basse de la grille d'auvent, en partie due par l'augmentation significative de la surface des parebrises, de sorte que soit rendu difficile le montage manuel de la grille d'auvent sur le joint d'étanchéité. La demanderesse a en effet constaté que le montage de la grille d'auvent sur le joint d'étanchéité nécessite, de la part du monteur, une dextérité de montage remarquable compte tenu qu'il est réalisé en aveugle. En effet, lorsque l'élément de crochetage de la grille d'auvent est présenté aux abords du moyen de maintien du joint d'étanchéité, la faible dimension de l'ouverture et le manque de visibilité apporté par le recouvrement de l'ouverture du joint d'étanchéité par la même grille rend difficile l'opération de fixation. De manière quasi systématique, l'élément d'accrochage de la grille d'auvent est monté à tâtons de sorte à augmenter inéluctablement l'opération de montage de la grille d'auvent. L'opération de montage étant classiquement réalisée en ligne de montage, il a donc été constatée une augmentation significative du temps de montage, par conséquent, du coût de montage.

La demanderesse a également constaté d'autres difficultés de montage liées en partie par la différence de rigidité entre le crochet rigide de la grille d'auvent et le joint d'étanchéité plus souple, de sorte à générer des déformations néfastes au montage de la grille d'auvent sur le joint. En effet, le montage de la grille d'auvent sur le joint nécessite un degré de précision remarquable de sorte que le moindre décalage de l'élément de crochetage sur l'ouverture du joint d'étanchéité engendre une déformation de ce dernier et une difficulté, voire une impossibilité, de montage.

La présente invention concerne un dispositif de fixation d'une grille d'auvent sur un élément d'étanchéité disposé sur un parebrise de véhicule automobile, la grille d'auvent étant constituée d'au moins un corps, une lèvre disposée à une extrémité du corps, et un élément de crochetage faisant saillie hors du corps de la grille d'auvent, l'élément d'étanchéité coopérant sur tout ou partie de la périphérie du parebrise et comportant au moins un moyen d'accrochage et un moyen de maintien, le moyen d'accrochage coopérant avec une extrémité du parebrise afin de solidariser l'élément d'étanchéité au parebrise, le moyen de maintien étant prévu pour coopérer avec l'élément de crochetage de la grille d'auvent, permettant de pallier tout ou partie des inconvénients de l'art antérieur relevés ci-dessus.

La présente invention a trait à un dispositif comportant au moins un moyen d'indexage et de guidage coopérant avec le moyen de maintien de l'élément d'étanchéité, de sorte à permettre l'indexage de la grille d'auvent sur l'élément d'étanchéité selon une direction d'indexage sensiblement parallèle au parebrise du véhicule, et le guidage de l'élément d'accrochage de la grille d'auvent vers le moyen de maintien selon une direction de guidage sensiblement perpendiculaire à la direction d'indexage, rendant ainsi plus aisé le montage de la grille d'auvent sur l'élément d'étanchéité.

Le dispositif de l'invention comporte de préférence plusieurs moyens d'indexage et de guidage disposés localement le long du moyen de maintien.

Par ailleurs, l'invention se caractérise en ce que le moyen d'indexage et de guidage se compose d'un corps à l'extrémité duquel est disposée une butée destinée à indexer et guider l'élément de crochetage de la grille d'auvent, le corps comportant au moins une extrémité retournée de sorte à créer un crochet destiné à coopérer avec le moyen de maintien de l'élément d'étanchéité.

La butée du moyen d'indexage et de guidage du dispositif de l'invention est de préférence en saillie hors de l'extrémité du corps du moyen d'indexage et de guidage, la butée étant adjacente au crochet.

Par ailleurs, le dispositif de l'invention comprend l'une des caractéristiques suivantes :
- le corps du moyen d'indexage et de guidage comprend au moins un moyen de retenue disposé proche des extrémités du corps du moyen d'indexage et de guidage,
- le moyen de retenue se compose d'au moins une nervure transversale faisant saillie hors du corps du moyen d'indexage et de guidage, disposée de préférence au niveau des crochets présents aux extrémités du corps,
- le moyen d'indexage et de guidage a une rigidité supérieure à la rigidité de l'élément d'étanchéité de sorte que la solidarisation du moyen d'indexage et de guidage sur l'élément d'étanchéité est obtenue par une déformation élastique de l'élément d'étanchéité,
- le moyen d'indexage et de guidage est une pièce monobloc réalisée en matière thermoplastique.

D'autres particularités et avantages apparaîtront à la lecture de la description ci-après faite en référence aux figures dans lesquelles :
- la figure 1 est une vue en coupe du dispositif de fixation d'une grille d'auvent sur un joint d'étanchéité de parebrise automobile, selon l'invention,
- la figure 2 est une vue en perspective d'un moyen d'indexage et de guidage du dispositif de la figure 1,
- la figure 3 concerne une vue en perspective d'une partie du dispositif de la figure 1.

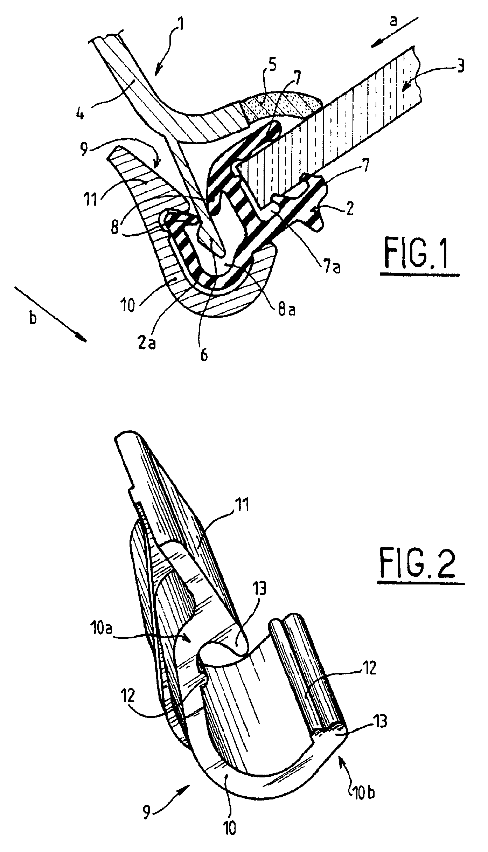

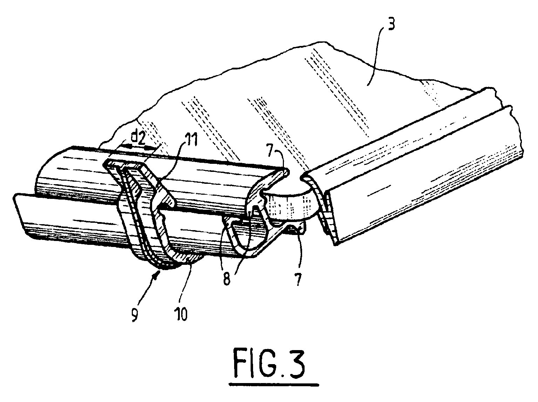

Un parebrise d'un véhicule automobile comporte classiquement en périphérie au moins un joint d'étanchéité conjuguant parfois plusieurs fonctions, comme l'étanchéité et le maintien du parebrise sur un élément de carrosserie du véhicule. L'élément de carrosserie peut concerner une grille d'auvent ou un élément de structure. Un tel agencement est illustré en figures 1 et 3, d'après lesquelles le joint d'étanchéité 2 coopère avec le parebrise 3 et une grille d'auvent 1, respectivement par l'intermédiaire des moyens d'accrochage 7 et de maintien 8.

Les moyens d'accrochage 7 et de maintien 8 se composent de préférence par des ouvertures à déformation élastique exerçant un degré de compression suffisant pour rendre pérenne la solidarisation entre soit le joint d'étanchéité 2 et le parebrise 3, soit la grille d'auvent 1 et le joint d'étanchéité 2.

L'ouverture 7a dédiée à solidariser le joint 2 sur le parebrise 3 s'étend dans le prolongement de ce dernier, coopérant de la sorte avec la base du parebrise. L'ouverture 8a dédiée au maintien de la grille d'auvent 1 sur le parebrise 3 est quant à elle orientée vers l'extérieur du véhicule, sensiblement selon une direction perpendiculaire à l'ouverture 7a.

Le moyen de maintien 8 du joint d'étanchéité 2 est sensiblement défini par une paroi 2a souple, de préférence à base d'un élastomère ou d'un thermoplastique connu. La paroi 2a, composant avantageusement le corps du joint d'étanchéité, comprend de préférence les moyens d'accrochage 7 et de maintien 8. Les moyens d'accrochage 7 et de maintien 8 sont sensiblement de forme en U et disposés de manière adjacente l'un à l'autre.

De manière classique, la grille d'auvent 1 comporte un corps 4 rigide sur lequel est disposé en saillie un élément de crochetage 6. De préférence, une extrémité supérieure de la grille d'auvent 1 comporte une lèvre 5 plus souple sensiblement destinée à coopérer avec la surface extérieure du parebrise 3.

Selon un mode préféré de réalisation de l'invention, donné à titre d'exemple et de manière non limitative, le dispositif de fixation de la grille d'auvent 1 sur le joint d'étanchéité 2 comporte un moyen d'indexage et de guidage 9 destiné à rendre plus aisé le montage de la grille. En effet, le joint d'étanchéité 2, disposé de préférence à la base du parebrise 3, est destiné à coopérer avec le moyen d'indexage et de guidage de l'invention, dont une description détaillée est effectuée ci-après. De préférence, le moyen 9 d'indexage et de guidage est conformé pour coopérer avantageusement avec la paroi 2a du joint d'étanchéité 2.

Ledit moyen 9 d'indexage et de guidage est de préférence composé d'un corps 10 rigide comportant avantageusement des extrémités 10a et 10b retournées. Chaque extrémité recourbée 10a ou 10b a possède sensiblement un rayon de courbure de sorte à définir des crochets 13. Chaque crochet 13 possède un rayon de courbure inférieur à celui conféré par la paroi 2a du joint d'étanchéité. Cette différence de conception conjuguée à la différence de rigidité entre le joint d'étanchéité 2 et le moyen 9 d'indexage et de guidage, assure un maintien du moyen 9 sur le joint 2.

Le moyen 9 d'indexage et de guidage comporte sensiblement au moins un moyen de retenue 12 afin d'assurer un maintien optimal du corps 10 sur la paroi 2a. Le moyen de retenue 12 se compose de préférence d'au moins une nervure faisant saillie hors du corps 10. De préférence, le moyen 9 comprend trois nervures transversales 12 destinées à opérer une déformation locale du joint d'étanchéité 2.

De préférence, et de manière avantageuse, l'extrémité 10a comprend une butée 11 faisant saillie hors du corps 10. La butée 11 rend ainsi apte les fonctions d'indexage et de guidage, attribuée au moyen 9, de la grille d'auvent 1 sur le parebrise 3. La butée 11 est ainsi disposée de manière adjacente au crochet 13 de l'extrémité 10a.

La butée 11 est destinée à limiter, lors du montage de la grille, son déplacement longitudinal et vertical. En effet, le montage s'effectue par un coulissement de l'extrémité de la partie 5 de la grille d'auvent 1 sur la surface extérieure du parebrise 3. Selon un premier déplacement, nommé a sur la figure 1, sensiblement parallèle au plan du parebrise 3, la butée 11 permet d'indexer longitudinalement et verticalement l'élément de crochetage 6 sur le joint d'étanchéité 2, selon une direction d'indexage a. En considérant que la direction longitudinale, de l'avant vers l'arrière du véhicule, soit nommée X et que la direction verticale, du bas vers le haut du véhicule, soit nommée Z, alors la butée 11 dans sa première fonction assure un indexage en -X et -Z.

La butée 11 est également destinée à guider l'élément de crochetage 6 dans le moyen de maintien 8 ménagé sur le joint d'étanchéité 2. Le moyen 9 d'indexage et de guidage assure avantageusement le positionnement de l'élément de crochetage 6 dans l'ouverture 8a selon un déplacement s'effectuant dans le prolongement de la butée 11. Selon la direction de guidage b, le guidage de l'élément de crochetage 6 dans l'ouverture 8a s'effectue en +X et -Z. Le dispositif de fixation de la grille d'auvent sur le joint du parebrise comporte ainsi un moyen 9 d'indexage et de guidage destiné à rendre apte le montage de la grille d'auvent selon des déplacements pour le montage sensiblement perpendiculaires l'un à l'autre.

Le joint d'étanchéité 2, comportant le moyen de maintien 8, exerce un effort d'intensité suffisante pour rendre immobile l'élément de crochetage 6 ainsi maintenu sur le joint d'étanchéité 2.

Afin de parfaire la solidarisation entre l'élément de crochetage 6 et le joint d'étanchéité 2, l'élément de crochetage coopère linéairement sur toute la longueur du joint 2. Ainsi, dans ce mode de réalisation, l'élément de crochetage 6 de la grille d'auvent est du type transversal. Le dispositif de fixation de la grille d'auvent 1 sur le joint 2 comporte alors au moins un moyen 9 d'indexage et de guidage.

Dans un second mode de réalisation, le dispositif de l'invention comporte avantageusement plusieurs moyens 9 répartis localement sur le joint d'étanchéité 2.

Un tel dispositif de fixation d'une grille d'auvent 1 sur un joint d'étanchéité 2 est remarquable en ce qu'il permet de rendre aisé le montage de la grille d'auvent 1 sur le véhicule, de sorte à diminuer considérablement le temps alloué au montage de cet élément de carrosserie.

Il permet de s'affranchir du montage à tâtons et des risques certains de détérioration du joint d'étanchéité relevés par la demanderesse. La qualité du montage de la grille d'auvent 1 sur le véhicule est ainsi grandement améliorée par le dispositif de l'invention.

## Revendications

1. Dispositif de fixation d'une grille d'auvent (1) sur un élément d'étanchéité (2) disposé sur un parebrise (3) de véhicule automobile, la grille d'auvent (1) étant constituée d'au moins un corps (4), une lèvre (5) disposée à une extrémité du corps, et un élément de crochetage (6) faisant saillie hors du corps (4) de la grille d'auvent, l'élément d'étanchéité (2) coopérant sur tout ou partie de la périphérie du parebrise (3) et comportant au moins un moyen d'accrochage (7) et un moyen de maintien (8), le moyen d'accrochage (7) coopérant avec une extrémité du parebrise (3) afin de solidariser l'élément d'étanchéité (2) au parebrise, le moyen de maintien (8) étant prévu pour coopérer avec l'élément de crochetage (6) de la grille d'auvent, **caractérisé en ce qu'**il comporte au moins un moyen (9) d'indexage et de guidage coopérant avec le moyen de maintien (8) de l'élément d'étanchéité, de sorte à permettre l'indexage de la grille d'auvent (1) sur l'élément d'étanchéité (2) selon une direction d'indexage (a) sensiblement parallèle au parebrise du véhicule, et le guidage de l'élément d'accrochage (6) de la grille d'auvent vers le moyen de maintien (8) selon une direction de guidage (b) sensiblement perpendiculaire à la direction d'indexage, rendant ainsi plus aisé le montage de la grille d'auvent (1) sur l'élément d'étanchéité (2).

2. Dispositif de fixation selon la revendication 1, **caractérisé en ce que** plusieurs moyens (9) d'indexage et de guidage sont disposés localement le long du moyen de maintien (8).

3. Dispositif de fixation selon l'une quelconque des revendications 1 et 2, **caractérisé en ce que** le moyen (9) d'indexage et de guidage se compose d'un corps (10) à l'extrémité duquel est disposée une butée (11) destinée à indexer et guider l'élément de crochetage (6) de la grille d'auvent (1), le corps (10) comportant au moins une extrémité (10a, 10b) retournée de sorte à créer un crochet (13) destiné à coopérer avec le moyen de maintien (8) de l'élément d'étanchéité (2).

4. Dispositif selon la revendication 3, **caractérisé en ce que** la butée (11) du moyen (9) d'indexage et de guidage est en saillie hors de l'extrémité (10a) du corps (10) du moyen d'indexage et de guidage, la butée (11) étant adjacente au crochet (13).

5. Dispositif de fixation selon la revendication 4, **caractérisé en ce que** le corps (10) du moyen d'indexage et de guidage comprend au moins un moyen de retenue (12) disposé proche des extrémités (10a, 10b) du corps du moyen (9) d'indexage et de guidage.

6. Dispositif de fixation selon la revendication 5, **caractérisé en ce que** le moyen de retenue (12) se compose d'au moins une nervure transversale faisant saillie hors du corps (10), disposée au niveau des crochets (13).

7. Dispositif de fixation selon l'une quelconque des revendications 1 à 6, **caractérisé en ce que** le moyen (9) d'indexage et de guidage a une rigidité supérieure à la rigidité de l'élément d'étanchéité (2) de sorte que la solidarisation du moyen (9) d'indexage et de guidage sur l'élément d'étanchéité (2) est obtenu par une déformation élastique de l'élément d'étanchéité (2).

8. Dispositif de fixation selon la revendication 7, **caractérisé en ce que** le moyen (9) d'indexage et de guidage est une pièce monobloc réalisée en matière thermoplastique.

## Claims

1. Device for fixing a cowl grille (1) to a sealing member (2) arranged on a motor vehicle windscreen (3), the cowl grille (1) being constituted by at least one body (4), a lip (5) arranged at one end of the body, and a hooking member (6) protruding from the body (4) of the cowl grille, the sealing member (2) co-operating over all or part of the periphery of the windscreen (3) and comprising at least one hooking means (7) and a holding means (8), the hooking means (7) co-operating with one end of the windscreen (3) in order to make the sealing member (2) integral with the windscreen, the holding means (8) being designed to co-operate with the hooking member (6) of the cowl grille, **characterised in that** it comprises at least one indexing and guidance means (9) co-operating with the holding means (8) of the sealing member, so as to allow the cowl grille (1) to be indexed to the sealing member (2) in an indexing direction (a) substantially parallel to the windscreen of the vehicle, and the guidance of the hooking member (6) of the cowl grille towards the holding means (8) in a guidance direction (b) substantially perpendicular to the indexing direction, thus making it easier to mount the cowl grille (1) on the sealing member (2).

2. Fixing device according to Claim 1, **characterised in that** several indexing and guidance means (9) are arranged locally along the holding means (8).

3. Fixing device according to any one of Claims 1 and 2, **characterised in that** the indexing and guidance means (9) is composed of a body (10) at the end of which is arranged a stop (11) intended to index and guide the hooking member (6) of the cowl grille (1), the body (10) comprising at least one end (10a, 10b) turned back on itself so as to create a hook (13) intended to co-operate with the holding means (8) of the sealing member (2).

4. Device according to Claim 3, **characterised in that** the stop (11) of the indexing and guidance means (9) protrudes from the end (10a) of the body (10) of the indexing and guidance means, the stop (11) being adjacent to the hook (13).

5. Fixing device according to Claim 4, **characterised in that** the body (10) of the indexing and guidance means comprises at least one retaining means (12) arranged near the ends (10a, 10b) of the body of the indexing and guidance means (9).

6. Fixing device according to Claim 5, **characterised in that** the retaining means (12) is composed of at least one transverse rib protruding from the body (10), arranged level with the hooks (13).

7. Fixing device according to any one of Claims 1 to 6, **characterised in that** the indexing and guidance means (9) has a rigidity greater than the rigidity of the sealing member (2) so that the indexing and guidance means (9) are made integral with the sealing member (2) by using elastic deformation of the sealing member (2).

8. Fixing device according to Claim 7, **characterised in that** the indexing and guidance means (9) is a one-piece part made of thermoplastic material.

## Patentansprüche

1. Vorrichtung zur Befestigung eines Windleitblechs (1) an einem Abdichtelement (2), das an einer Windschutzscheibe (3) eines Kraftfahrzeugs angeordnet ist, wobei das Windleitblech (1) mindestens einen Körper (4), eine an einem Ende des Körpers angeordnete Leiste (5) und ein Einhakelement (6) umfasst, das aus dem Körper (4) des Windleitblechs heraussteht, wobei das Abdichtelement (2) über einen Teil oder den ganzen Umfang der Windschutzscheibe (3) zusammenwirkt und mindestens eine Eingreifvorrichtung (7) und eine Haltevorrichtung (8) umfasst und die Eingreifvorrichtung (7) mit einem Ende der Windschutzscheibe (3) zusammenwirkt, um das Abdichtelement (2) fest mit der Windschutzscheibe zu verbinden, wobei die Haltevorrichtung (8) vorgesehen ist, mit dem Einhakelement (6) des Windleitblechs zusammenzuwirken, **dadurch gekennzeichnet, dass** sie mindestens eine Anpassungs- und Führungsvorrichtung (9) umfasst, die mit der Haltevorrichtung (8) des Abdichtelements zusammenwirkt, um eine Anpassung des Windleitblechs (1) an das Abdichtelement (2) in einer Anpassungsrichtung (a), die im Wesentlichen parallel zur Windschutzscheibe des Fahrzeugs verläuft, sowie die Führung des Einhakelements (6) des Windleitblechs zum Halteelement (8) in einer im Wesentlichen quer zur Anpassungsrichtung verlaufenden Führungsrichtung (b) zu ermöglichen, wodurch die Montage des Windleitblechs (1) an das Abdichtelement (2) vereinfacht wird.

2. Befestigungsvorrichtung nach Anspruch 1, **dadurch gekennzeichnet, dass** mehrere Anpassungs- und Führungsvorrichtungen (9) örtlich verteilt entlang der Haltevorrichtung (8) angeordnet sind.

3. Befestigungsvorrichtung nach einem der Ansprüche 1 und 2, **dadurch gekennzeichnet, dass** die Anpassungs- und Führungsvorrichtung (9) aus einem Körper (10) besteht, an dessen Ende ein Anschlag (11) angeordnet ist, der das Einhakelement (6) des Windleitblechs (1) anpassen und führen soll, wobei der Körper (10) mindestens ein Ende (10a, 10b) umfasst, das so umgebogen ist, dass es einen Haken (13) bildet, der mit der Haltevorrichtung (8) des Abdichtelements (2) zusammenwirken soll.

4. Vorrichtung nach Anspruch 3, **dadurch gekennzeichnet, dass** der Anschlag (11) der Anpassungs- und Führungsvorrichtung (9) aus dem Ende (10a) des Körpers (10) der Anpassungs- und Führungsvorrichtung heraussteht, wobei der Anschlag (11) an den Haken (13) angrenzt.

5. Befestigungsvorrichtung nach Anspruch 4, **dadurch gekennzeichnet, dass** der Körper (10) der Anpassungs- und Führungsvorrichtung mindestens eine Rückhaltevorrichtung (12) umfasst, die nahe den Enden (10a, 10b) des Körpers der Anpassungs- und Führungsvorrichtung (9) angeordnet ist.

6. Befestigungsvorrichtung nach Anspruch 5, **dadurch gekennzeichnet, dass** die Rückhaltevorrichtung (12) aus mindestens einer Querrippe besteht, die aus dem Körper (10) heraussteht und im Bereich der Haken (13) angeordnet ist.

7. Befestigungsvorrichtung nach einem der Ansprüche 1 bis 6, **dadurch gekennzeichnet, dass** die Anpassungs- und Führungsvorrichtung (9) eine größere Starrheit als das Abdichtelement (2) hat, sodass die feste Verbindung der Anpassungs- und Führungsvorrichtung (9) mit dem Abdichtelement (2) durch eine elastische Verformung des Abdichtelements (2) erreicht wird.

8. Befestigungsvorrichtung nach Anspruch 1, **dadurch gekennzeichnet, dass** die Anpassungs- und Führungsvorrichtung (9) ein einstückiges Element ist, das aus einem Thermoplast hergestellt wurde.
